# EUROPEAN PATENT APPLICATION

(11) **EP 2 796 258 A2**
(43) Date of publication of application: **29.10.2014**
(21) Application number: 12815868.0
(22) Date of filing: 21.12.2012
(51) Int. Cl.: B27J 5/00

(54) **ELECTROCONDUCTING COVER WITH INSULATING COATING**

(30) Priority: 23.12.2011 PT 2011106072
(71) Applicant: Germano, Joâo Manuel Machado Pinto, 1990-092 Lisboa (PT)
(72) Inventor: MACHADO PINTO GERMANO, João Manuel, 1990-092 Lisboa (PT); DOS SANTOS SILVA, Jorge Miguel, 1990-092 Lisboa (PT)
(74) Representative: Silvestre de Almeida Ferreira, Luís Humberto
(86) International application number: PCT/PT2012/000053
(87) International publication number: WO 2013/095171

(57) **Abstract**

The invention presented here belongs to the technical field of insulating surfacing technologies.

It is intended to solve the problem of surface materials with electroconductive characteristics, using diverse materials boundedin layers without the use of conventional wiring.

The main applications for this material are for insulation, decoration, thick partition walls, panels, furniture, advertising, signalling and built surfaces in general.

The insulating electroconductive surfacing material comprises a layer of polyurethane foam (1) with 5 mm thick, two electroconductive aluminum foils (2), two layers of natural cork agglomerate (3) of 5mm thick, light-emitting diodes known as LED (6), LED terminals (5) with different lengths, epoxy varnish coating (4) on the longest terminal of each 1ED, and an electrical transformer (7) with low voltage capacity.

## Description

### Technical field of the invention

The invention presented here belongs to the technical domain of insulating material technologie. This material comprises two exterial layers of cork, with two aluminum foils and a layer of polyurethane foam in the middle. This is a new surfacingmaterial which takes advantage of the properties of the cork and polyurethane combined with the electrical conductivity of the aluminum enabling diferent applications and challenging the imagination of designers, architects and engineers in designing new surfaces, parts and solutions.

### Prior art

It currently exists on the market lighting solutions through panels made of polyurethane foam and electrically conductive films. This system is also charged with a connector on the face or edge of a panel connected to an electrical transformer. However, they do not possess the additional features conferred by the cork, forflexibility and insulantion, thus making it a material for different applications.

### Detailed description of the invention

The insulating electroconductive surfacing material is an innovative product composed of a layer of flexible polyurethane foam (1), which is a non electrical conductive material, of 5mm of thickness, covered on both the faces with an electroconductive aluminum foil (2) on the internal face, followed by a layer of natural agglomerate cork (3) on the outer most layer of 5mm thick. The electrical polarities are thus isolated from the outside by layers of cork and between them by the layer of polyurethane foam. All these layers are glued sequentially with a glue / adhesive based on polyurethane. To interact with this surfacing material we have LED's (6) which are introduced, piercing it, thus connecting the LED terminals (5) with different lengths to the respective polarities transmitted in the foils. The longer terminal is insulated with a epoxy varnish coating (4) which insulates the electric charge from the first aluminum foil. Powering this surfacing material is an electric transformer (7) with low voltage capacity polarizing the aluminum foils and calculated for the number of LEDs to be installed.

### Description of Figures / Components

### Polyurethane foam (1):

Polyurethane is a synthetic chemical composition, formed from chemical reactions between two elements, by adding a polyisocyanate and a polyester polyol or other reagents with two or more groups of reactive hydrogens. Polyurethane is an extremely versatile material, and can be divided into four categories: rigid foam (for thermal and acoustic insulation); flexible foams (mattresses, covers, pillows), elastomers (dampers, slip coatings) and paints. Polyurethane foam is a porous polymeric material formed by an aggregation of bubbles, electrically non-conductive with a low thermal conductivity and important capacity to resist fire. As acoating, there are also a wide range of uses for the polyurethane. In the electronics industry, polyurethane serves as insulation material for electrical and electronic components and wire coatings. The main characteristics of polyurethane for these uses are low viscosity, good ductility, high auto-ignition temperature and high hydrolysis resistance.

### Aluminum foil (2):

Aluminium is a light, soft, resilient, malleable, ductile, nontoxic, non-magnetic metal with good thermal and electrical conductivity and does not create sparks when exposed to friction. Suitable for machining and casting, as well as having an excellent corrosion resistance and durability due to the protective layer of oxide.

Aluminum alloys have increased their strength without affecting other properties. New alloys have been developed by combining the appropriate properties for specific applications.

Its good weight/strength ratio allows it to have a diverse range of applications that allied with it's waterproof, opacity, ductility and conductivity characteristics make aluminum foil the ideal material to conduct an electrical charge in the insulating electroconductive surface.

### Cork Layer (3):

By definition, cork is parenchyma suberose originated from the periderm of the cork oak (Quercus suber L.). It consists mainly of suberin, a substance which represents about 40% of its dry weight, lignin (+ or-20%), polysaccharides (+ or-20%) and other products (+ or - 20%). Macroscopically, it is a light, elastic material and practically impermeable to liquids and gases, providing thermal, electric, acoustic and vibration insulation, also innocuous and virtually rot-proof, with the ability to be compressed almost without lateral expansion.

It has a high dimensional stability and shows a considerable resistance against compressive loads. Cork is also a material that dissipates the deformation energy.

It has an average density of 200 kg/m3, and a low thermal conductivity. It also has a remarkable chemical and biological stability, good fire resistance and high durability in freeze-unfreeze conditions.

All these features allow a wide range of applications for cork.

### Led terminals(4):

They are common terminals of diodes with the exception of having different lengths which enables the interception of the correct polarity. Sometimes the cathode comes shorter from factory, than the anode to identify better.

### Epoxy varnish coating (5):

An epoxy resin is a thermoset plastic that hardens when mixed with a catalyst or hardener. Bi-component epoxy systems are used, among many other applications, in electrical insulation (low, medium and high voltage). This is the main feature which will insulate the longest terminal thereby preventing electrical transmission with the first foil.

### Light-emitting diode known as LED (6):

The light-emitting diode is a semiconductor which emits visible light. The light is a relatively narrow spectral band and is produced by interaction of the electron energy. This process of emitting light by applying an electrical charge is called electroluminescence. It is especially used in microelectronics products and as a substitute of light bulbs.

### Electrical transformer (7):

An electrical transformer with the adequate voltage capacity to supply the LED's within the insulating electroconductive surfacing material.

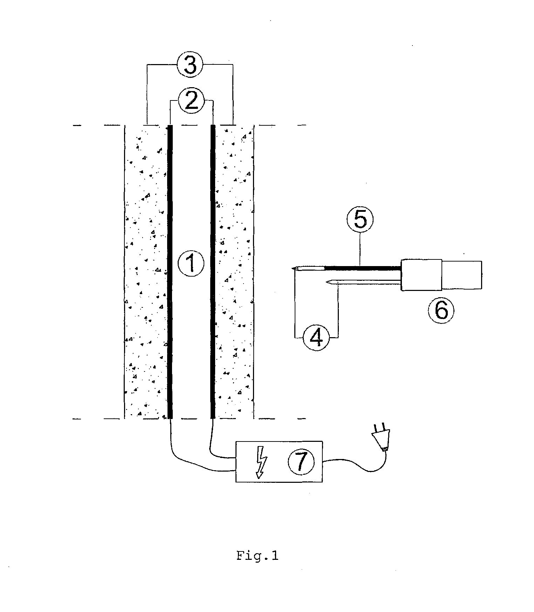

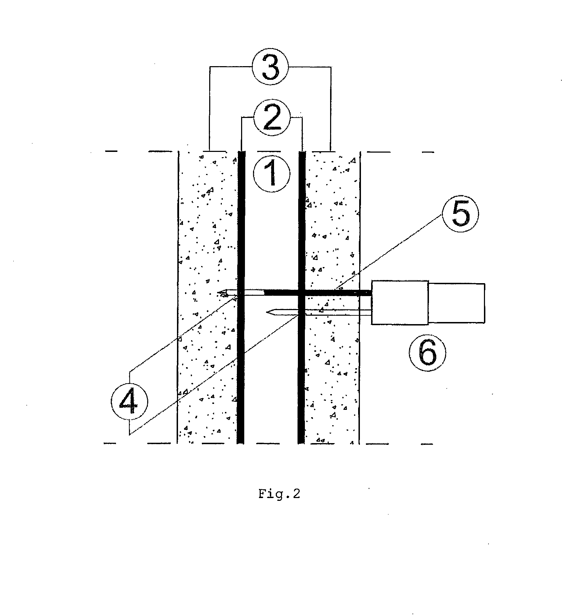

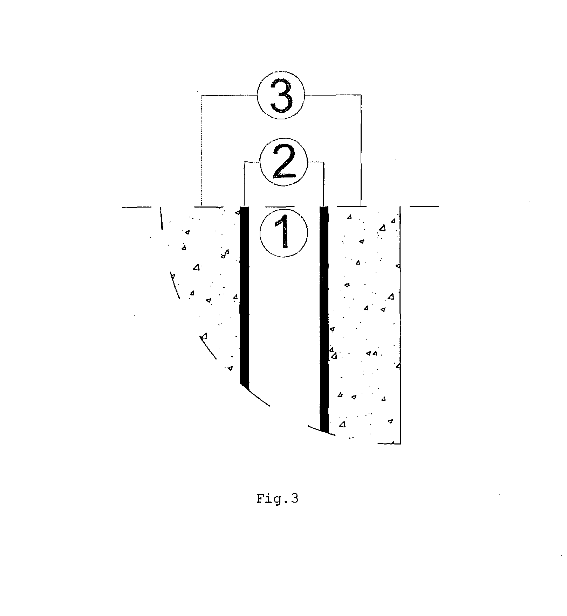

Figure 1 shows a section of the insulating electroconductive surfacing material with all of its constituents. Figure 2 shows a section of the insulating electroconductive coating with the terminals of the Led's inserted and connecting the aluminum foils to the respective polarities. Figure 3 shows a detail of the section representing its constituent layers.

### Applications:

New applications, thanks to its technical characteristics that allow the use of this insulating electroconductive surfacing material in innovative technical, semi-natural and ecological installations enabling a wide range of areas of application in construction, architecture, decoration and even furniture.

The characteristics acquired with cork, in particular thermal resistance, acoustic insulation, thermal insulation, anti-vibration insulation, light weight, flexibility and durability under freeze-unfreeze conditions will create a new generation of configurable interior and exterior coverings with the possibility of visual change. The light weight of this product allows its application in walls and ceilings, insulating and illuminating with a single product in a single application without the need for additional works or infrastructures.

## Claims

1. Insulating electroconductive surfacing material**characterized by** being constituted of a layer of polyurethane foam (1) of 5mm thick, two electroconductive aluminum foils (2), two layers of natural cork agglomerate (3) of 5mm thick, Light-emitting diode known as LED (6), LED terminals (5) with different lengths, epoxy varnish coating (4) in the longest terminal of each 1ED, and an electrical transformer (7) with low voltage capacity.

2. Insulating electroconductivesurfacing material, according to previous claim, **characterized by**, having two flexible layers of insulating material made of cork (thermal, acoustic and vibration).
